# EUROPEAN PATENT APPLICATION

(11) **EP 4 759 786 A1**
(43) Date of publication of application: **17.06.2026**
(21) Application number: 25219436.0
(22) Date of filing: 28.11.2025
(51) Int. Cl.: C04B 35/52, C04B 35/622, C04B 35/83, H01M 4/88, H01M 8/0234, H01M 8/0245

(54) **FUEL CELL GAS DIFFUSION LAYER BASE MATERIAL AND METHOD FOR PRODUCING SAME**

(30) Priority: 10.12.2024 JP 2024215124; 05.08.2025 JP 2025130900
(71) Applicant: AISIN CORPORATION, Aichi 448-8650 (JP)
(72) Inventor: HONJO, Takahide, Kariya, 448-8650 (JP); SUZUKI, Haruki, Kariya, 448-8650 (JP)
(74) Representative: Winter, Brandl - Partnerschaft mbB

(57) **Abstract**

A method for producing a fuel cell gas diffusion layer base material sequentially Includes: a water-containing sheet preparation step (S1) of preparing a water-containing sheet (11) containing a carbon fiber (C1), graphite particles (P1) having a particle diameter more than 120 µm as measured by a laser diffraction/scattering method, and a fibrillated organic fiber (R1), which is to be carbonized in a subsequent carbonization step (S5), by using a slurry containing the carbon fiber, the graphite particles, and the fibrillated organic fiber; a composite sheet preparation step (S2) of preparing a composite sheet (12) by water-squeezing and drying the water-containing sheet; a resin impregnation step (S3) of preparing a resin impregnation sheet (13) by impregnating the composite sheet with a carbon precursor resin to be carbonized in the subsequent carbonization step; a compression step (S4) of preparing a thinned sheet (14) by compressing the resin impregnation sheet; and the carbonization step of heating and firing the thinned sheet in a non-oxidizing atmosphere.

## Description

### TECHNICAL FIELD

This disclosure relates to a gas diffusion layer base material for use in forming a gas diffusion layer of a fuel cell, and a method for producing the same.

### BACKGROUND DISCUSSION

A polymer electrolyte fuel cell (hereinafter, simply referred to as a "fuel cell") widely used as a power source of an automobile or the like is formed by laminating a plurality of fuel cells with separators interposed therebetween, and in one unit cell, a cathode (+) side electrode and an anode (-) side electrode are disposed on both surfaces of a polymer electrolyte membrane that selectively transmits specific ions, thereby forming a membrane electrode assembly. The cathode (+) side electrode and the anode (-) side electrode are each formed by a catalyst layer made of an ion exchange resin and an electrically conductive material, such as carbon supporting a catalyst such as platinum, and a porous gas diffusion layer disposed outside each catalyst layer. The separators are disposed outside the gas diffusion layer constituting the membrane electrode assembly, and have a gas flow path for supplying a fuel gas (anode gas) or an oxidizing gas (cathode gas) and discharging a product gas and an excess gas, and the membrane electrode assembly is sandwiched between the separators.

In the fuel cell having the above configuration, the gas diffusion layer constituting the electrode of the single cell battery is disposed to enhance diffusivity of a reaction gas. Since the gas diffusion layer has an action (gas diffusibility) of diffusing the fuel gas or the oxidizing gas supplied from the gas flow path in the separator to the catalyst layer adjacent to the gas diffusion layer, the gas diffusion layer has not only gas permeability but also electrical conductivity as a current collecting function of efficiently moving electrons for an electrochemical reaction. In addition, the gas diffusion layer always keeps the polymer electrolyte membrane and the catalyst layer in an optimum wet state, and in particular, in the gas diffusion layer of the cathode, in order to prevent a flooding phenomenon (a phenomenon in which pores of the gas diffusion layer are clogged with water) and stabilize power generation performance, water repellency (drainage property) for discharging excessive reaction product water or dew condensation water generated by an electrochemical reaction between hydrogen and oxygen during power generation is required.

In the related art, as a base material for forming the gas diffusion layer, a base material containing a carbon fiber as an electrically conductive fiber and a method for producing the same are known.

For example, JP 2020-87826A (Reference 1) discloses a porous gas diffusion layer base material containing a carbide made of a carbon fiber aggregate in which carbon fibers are entangled with each other and binding the carbon fibers of the carbon fiber aggregate, and spherical graphite and/or artificial graphite held between the carbon fibers of the carbon fiber aggregate and having a median diameter in a range of 40 µm to 120 µm, and discloses, as a method for producing such a gas diffusion layer base material, a method for producing a gas diffusion layer base material including a papermaking step of forming an aggregate by papermaking together with a carbon fiber serving as a base, an organic fiber to be burned out by a subsequent heat treatment, and spherical graphite and/or artificial graphite having a median diameter in a range of 40 µm to 120 µm, a resin impregnation step of impregnating the aggregate formed in the papermaking step with a carbon precursor resin, a drying step of drying the aggregate impregnated with the carbon precursor resin, and a carbonization and graphitization step of heating and firing the aggregate dried in the drying step in a non-oxidizing atmosphere.

In addition, JP 2022-125104A (Reference 2) discloses a carbon fiber sheet in which particles or particle aggregates are present between carbon fibers, in which as the particles or the particle aggregates, large particles or large particle aggregates having a diameter of 1.5 times or more an average fiber diameter of the carbon fibers are contained between the carbon fibers in a thickness direction.

A need thus exists for a gas diffusion layer base material having a high normal air permeability in a thickness direction and providing a fuel cell that has a low contact resistance value per thickness and that exhibits high power generation performance, and a method for producing the same.

The present inventors have found that the above problems can be solved by using graphite particles having a particle diameter of more than 120 µm in combination with a fibrillated organic fiber in producing a fuel cell gas diffusion layer base material using a carbon fiber, graphite particles, and an organic fiber.

### SUMMARY

This disclosure is described below.
[1] A method for producing a fuel cell gas diffusion layer base material, the method sequentially including:
   a water-containing sheet preparation step of preparing a water-containing sheet containing a carbon fiber, graphite particles having a particle diameter (hereinafter, the particle diameter measured by this method is simply referred to as "particle diameter") more than 120 µm as measured by a laser diffraction/scattering method, and a fibrillated organic fiber, which is to be carbonized in a subsequent carbonization step, by using a slurry containing the carbon fiber, the graphite particles, and the fibrillated organic fiber;
   a composite sheet preparation step of preparing a composite sheet by water-squeezing and drying the water-containing sheet;
   a resin impregnation step of preparing a resin impregnation sheet by impregnating the composite sheet with a carbon precursor resin to be carbonized in the subsequent carbonization step;
   a compression step of preparing a thinned sheet by compressing the resin impregnation sheet; and
   the carbonization step of heating and firing the thinned sheet in a non-oxidizing atmosphere.
[2] The method for producing a fuel cell gas diffusion layer base material according to the above [1], in which a content ratio of the carbon fiber contained in the composite sheet is 20 mass% to 80 mass%.
[3] The method for producing a fuel cell gas diffusion layer base material according to the above [1], in which a content ratio of the graphite particles contained in the composite sheet is 5 mass% to 60 mass%.
[4] The method for producing a fuel cell gas diffusion layer base material according to the above [1], in which a content ratio of the fibrillated organic fiber contained in the composite sheet is 5 mass% to 60 mass%.
[5] The method for producing a fuel cell gas diffusion layer base material according to the above [1], in which a content ratio of the carbon precursor resin contained in the resin impregnation sheet is 10 mass% to 80 mass%.
[6] The method for producing a fuel cell gas diffusion layer base material according to the above [1], in which in the compression step, the graphite particles are crushed and compressed in a plane direction to a thickness less than the particle diameter of the graphite particles.
[7] A fuel cell gas diffusion layer base material obtained by the method for producing a fuel cell gas diffusion layer base material according to the above [1].
[8] The fuel cell gas diffusion layer base material according to the above [7], in which graphite is exposed on a surface on at least one surface side.
[9] A gas diffusion layer base material obtained by carbonizing a carbonized precursor sheet containing a carbon fiber, graphite particles having a diameter of more than 120 µm, a fibrillated organic fiber, and an impregnation resin, in which the graphite particles are exposed on a surface on at least one surface side.

According to the method for producing a fuel cell gas diffusion layer base material in this disclosure, a gas diffusion layer base material having a high normal air permeability in a thickness direction can be obtained, and after preparing a membrane electrode assembly using this gas diffusion layer base material, a fuel cell having a low contact resistance value per thickness of the gas diffusion layer base material can be obtained. That is, in this disclosure, it is possible to produce a gas diffusion layer base material suitable as a production material of a fuel cell having both gas diffusibility and electrical conductivity. In this disclosure, in the water-containing sheet obtained by the water-containing sheet preparation step and the composite sheet obtained by the composite sheet preparation step, the graphite particles having a particle diameter of more than 120 µm are particularly reliably held between the fibrillated organic fibers, and there are large voids between adjacent graphite particles as compared with the case of using graphite particles having a small particle diameter of 120 µm or less, and thereafter, the graphite particles contained in the resin impregnation sheet may be crushed by the compression step, and a gas diffusion layer base material having voids formed therein to a degree to have air permeability in the thickness direction is efficiently obtained by the carbonization step.

A fuel cell produced using the fuel cell gas diffusion layer base material obtained by this disclosure as a cathode gas diffusion layer base material can be used for a transportation fuel cell for vehicles, a stationary fuel cell, and the like.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a flowchart showing a flow of a production method disclosed here;
Fig. 2 is a schematic cross-sectional view of a fuel cell gas diffusion layer base material obtained by this disclosure; and

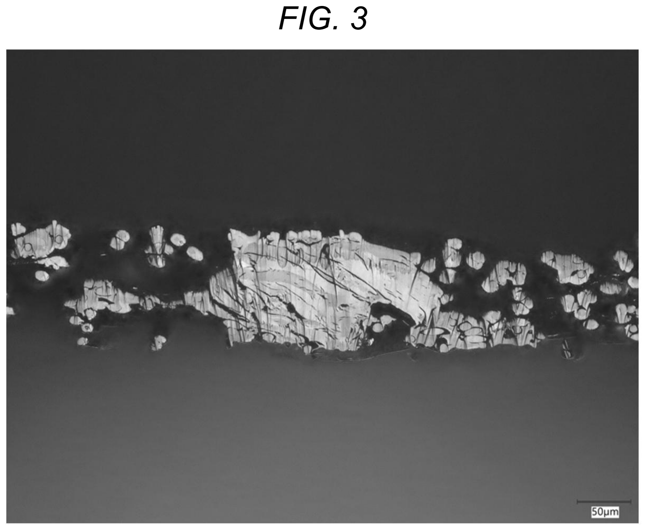

Fig. 3 is an image showing a cross section of a fuel cell gas diffusion layer base material obtained in Example 1.

### DETAILED DESCRIPTION

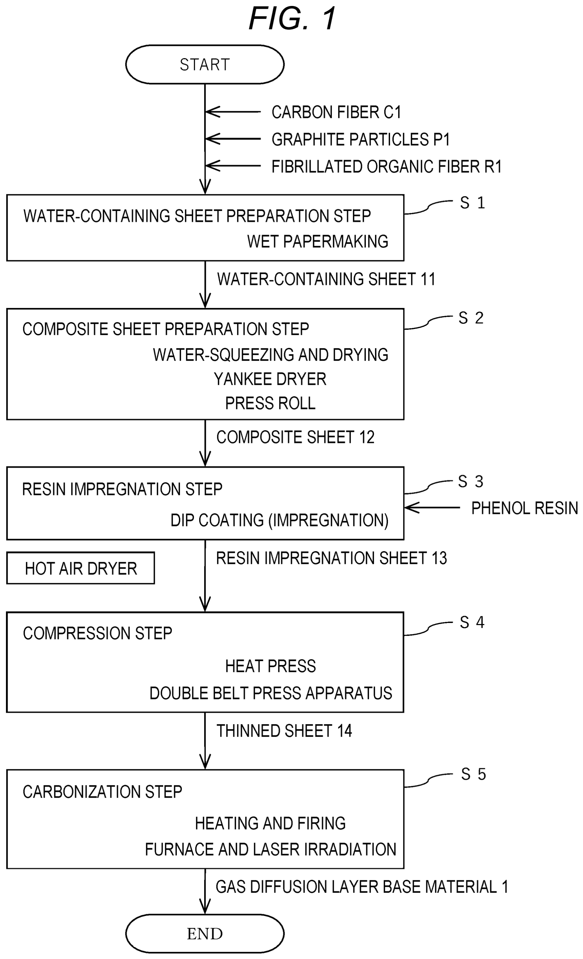

A method for producing a fuel cell gas diffusion layer base material disclosed here will be described with reference to Fig. 1.

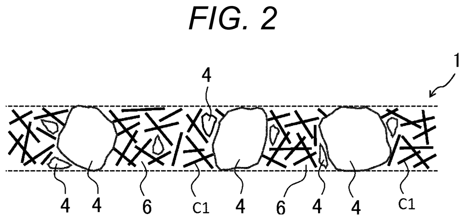

The production method disclosed here is a method for producing a gas diffusion layer base material 1 (see Fig. 2), which is a production material for a fuel cell, using a raw material containing a carbon fiber C1, graphite particles P1 having a particle diameter of more than 120 µm, and a fibrillated organic fiber R1, and as described above, the method sequentially includes a water-containing sheet preparation step S1, a composite sheet preparation step S2, a resin impregnation step S3, a compression step S4, and a carbonization step S5. The method for producing a fuel cell gas diffusion layer base material disclosed here may further include other steps (to be described later) as necessary.

The water-containing sheet preparation step S1 is a step of preparing a water-containing sheet 11 using a slurry containing the carbon fiber C1, the graphite particles P1 having a particle diameter of more than 120 µm, and the fibrillated organic fiber to be carbonized in the subsequent carbonization step (hereinafter referred to as the "fibrillated organic fiber R1"). If necessary, the slurry may contain other components such as graphite particles having a particle diameter of 120 µm or less (hereinafter referred to as "graphite particles P2") and an unbranched organic fiber (hereinafter referred to as an "organic fiber R2").

That is, a water-containing sheet raw material used in the water-containing sheet preparation step S1 is the slurry containing the carbon fiber C1, the graphite particles P1, and the fibrillated organic fiber R1, and may contain other components such as the graphite particles P2 and the organic fiber R2 as necessary. In addition, a solvent in the slurry is water or an aqueous solvent. Of these, the aqueous solvent is a mixed solvent of water and a water-soluble organic solvent. Examples of the water-soluble organic solvent include alcohols (such as methanol, ethanol, and isopropanol), ketones (such as acetone and ethyl methyl ketone), ethers (such as dimethyl ether), and acetonitrile. These water-soluble organic solvents may be used alone or in combination of two or more types thereof. A content of the water-soluble organic solvent in the aqueous solvent is preferably 50 mass% or less, more preferably 30 mass% or less, and still more preferably 10 mass% or less, when the aqueous solvent is 100 mass%.

A configuration (type, size, and the like) of the carbon fiber C1 disclosed here is not particularly limited. The carbon fiber C1 may be any of a vapor-grown carbon fiber, a carbon nanotube (single wall, double wall, multi-wall, cup-laminated type, and the like), a polyacrylonitrile (PAN)-based carbon fiber, a pitch-based carbon fiber, and a rayon-based carbon fiber.

The carbon fiber C1 may be either linear or curved.

The carbon fiber C1 has an average fiber diameter of preferably 5 µm to 15 µm, and more preferably 6 µm to 8 µm, from the viewpoint of gas diffusibility and electrical conductivity exhibited by a gas diffusion layer in a fuel cell produced using the obtained fuel cell gas diffusion layer base material 1.

The carbon fiber C1 usually has a fiber length with an upper limit of 12 mm and a lower limit of 2 mm. In addition, the carbon fiber C1 has an average fiber length of preferably 2 mm to 9 mm, and more preferably 3 mm to 6 mm, from the viewpoint of the gas diffusibility and the electrical conductivity exhibited by the gas diffusion layer in the fuel cell produced using the obtained fuel cell gas diffusion layer base material 1.

In this disclosure, the graphite particles P1 having a particle diameter of more than 120 µm are used from the viewpoint of the gas diffusibility and the electrical conductivity exhibited by the gas diffusion layer in the fuel cell produced using the obtained fuel cell gas diffusion layer base material 1. In this disclosure, a configuration (type, size, specific surface area, and the like) of the graphite particles P1 is not particularly limited. The graphite particles P1 may be made of either natural graphite or artificial graphite. In addition, a shape of the graphite particles P1 can be a spherical shape, an elliptical spherical shape, a plate shape, a linear shape, an irregular shape, or the like, and in a case of the spherical shape or the elliptical spherical shape, the graphite particles P1 may be an expanded body. Further, the graphite particles P1 may be an aggregate of primary particles. The graphite particles P1 have a particle diameter of preferably 125 µm to 300 µm, and more preferably 130 µm to 250 µm.

In the water-containing sheet preparation step S1 disclosed here, the graphite particles P2 having a particle diameter of 120 µm or less may be used as long as the water-containing sheet 11 holding the same is obtained. A configuration (type, specific surface area, shape, and the like) of the graphite particles P2 can be the same as that of the graphite particles P1. The graphite particles P2 preferably have a particle diameter of 10 µm to 120 µm.

The fibrillated organic fiber R1 disclosed here is an organic fiber to be carbonized in the subsequent carbonization step, and includes a trunk fiber portion extending in a length direction of the fiber, and a branched fiber portion branched from the trunk fiber portion and usually having a diameter shorter than that of the trunk fiber portion. A configuration (type, size, and the like) of the fibrillated organic fiber R1 is not particularly limited. Examples of a constituent material of the fibrillated organic fiber R1 include an acrylonitrile-based polymer, a polyvinyl alcohol, a polyolefin, a polyurethane, a polyester, a polyamide, an acrylic resin, an aramid, a polyacetal, a polylactic acid, a phenol resin, and a cellulose. Among these, the acrylonitrile-based polymer is preferred.

A cross-sectional shape of the trunk fiber portion constituting the fibrillated organic fiber R1, in which the branched fiber portion is not involved, is not particularly limited, and may be a circle, an ellipse, a polygon, or a deformed shape thereof, and this cross-sectional shape is usually the same over the entire fibrillated organic fiber R1 in the length direction. The trunk fiber portion has an average fiber diameter of preferably 5 µm to 20 µm, and more preferably 6 µm to 8 µm. The trunk fiber portion has a length, which is substantially a length of the fibrillated organic fiber R1, of preferably 1 mm to 15 mm, and more preferably 1 mm to 10 mm.

A cross-sectional shape of the branched fiber portion constituting the fibrillated organic fiber R1 is not particularly limited, and may be a circle, an ellipse, a semicircle, a fan, a polygon, or a deformed shape thereof, and this cross-sectional shape may be usually the same or different over the entire branched fiber portion in the length direction.

A degree of fibrillation of the fibrillated fiber R1 is generally quantified by a freeness, a specific surface area, and the like. The fibrillated organic fiber R1 disclosed here has a Canadian standard freeness of preferably 50 mL to 700 mL, and more preferably 150 mL to 600 mL, as measured according to JIS P 8121-2. When the fibrillated organic fiber R1 having a freeness in the above range is used, in the water-containing sheet 11 obtained in the water-containing sheet preparation step S1 and a composite sheet 12 obtained in the composite sheet preparation step S2, a degree of entanglement between a plurality of types of fibers increases, and at least the graphite particles P1 having a particle diameter of more than 120 µm, preferably the graphite particles P1 and the carbon fiber C1, can be formed into a stable sheet shape in which the graphite particles P1 and the carbon fiber C1 are suitably held while utilizing the branched fiber portion.

In the water-containing sheet preparation step S1 disclosed here, as described above, the unbranched organic fiber R2, that is, a general linear organic fiber, may be further used. A configuration (structure such as a cross-sectional shape, size such as a fiber diameter and a fiber length) of the organic fiber R2 is not particularly limited. The organic fiber R2 may be either a monofilament or a multifilament. In addition, examples of a constituent material of the organic fiber R2 include an acrylonitrile-based polymer, a polyvinyl alcohol, a polyolefin, a polyurethane, a polyester, a polyamide, an acrylic resin, an aramid, a polyacetal, a polylactic acid, a phenol resin, and a cellulose. In the water-containing sheet preparation step S1 disclosed here, it is preferable to use both the fibrillated organic fiber R1 and the organic fiber R2, and it is particularly preferable to use a resin fiber made of a polyvinyl alcohol as the organic fiber R2. The organic fiber R2 to be used may be two or more types of organic fibers containing resins different from each other, and for example, a resin fiber mainly containing a high melting point resin and a resin fiber mainly containing a resin having a melting point lower than that of the high melting point resin may be used in combination.

In the water-containing sheet preparation step S1 disclosed here, ratios of usage amounts of the carbon fiber C1, the graphite particles P1, and the fibrillated organic fiber R1 to be used are not particularly limited. When a total of the above is 100 mass%, the ratios of the usage amounts of the carbon fiber C1, the graphite particles P1, and the fibrillated organic fiber R1 are respectively preferably 20 mass% to 80 mass%, 5 mass% to 60 mass%, and 5 mass% to 60 mass% and more preferably 30 mass% to 70 mass%, 10 mass% to 50 mass%, and 10 mass% to 50 mass%.

In this disclosure, as described above, the graphite particles P2 or the organic fiber R2 can be used, and ratios of usage amounts thereof are as follows.

An upper limit of the usage amount of the graphite particles P2 is preferably 50 parts by mass, and more preferably 40 parts by mass, when the usage amount of the graphite particles P1 is 100 parts by mass.

In addition, in the case of using the organic fiber R2, the ratios of the usage amounts of the carbon fiber C1, the graphite particles P1, the fibrillated organic fiber R1, and the organic fiber R2 are respectively preferably 20 mass% to 80 mass%, 5 mass% to 60 mass%, 5 mass% to 60 mass%, and 5 mass% to 60 mass%, and more preferably 30 mass% to 70 mass%, 10 mass% to 40 mass%, 10 mass% to 40 mass%, and 10 mass% to 40 mass%, when a total thereof is 100 mass%.

The slurry disclosed here contains at least the carbon fiber C1, the graphite particles P1, and the fibrillated organic fiber R1, and can contain a binder, a carbide of an organic material, an additive (a flocculant, a viscosity modifier, a surfactant, or the like), and the like as necessary.

Examples of the binder include a polyvinyl alcohol, polyvinyl acetate, polyolefins such as a polyethylene and a polypropylene, polyesters such as a polyethylene terephthalate, a polyacrylonitrile, a cellulose, a polyethylene oxide, a polyacrylamide, a phenol resins, a xylenol resin, a styrene-butadiene rubber, a starch, and a corn starch.

A solid content concentration in the slurry disclosed here is preferably 0.001 mass% to 2 mass%, and more preferably 0.01 mass% to 0.1 mass%.

A method for preparing the slurry is not particularly limited, and for example, a method of mixing raw materials using a rotary apparatus such as a pulper can be used.

In the water-containing sheet preparation step S1 and the composite sheet preparation step S2 disclosed here, a papermaking method is preferably applied.

In the water-containing sheet preparation step S1, a paper machine such as a cylinder paper machine, a Fourdrinier paper machine, a short wire paper machine, or an inclined wire type paper machine can be used. A papermaking speed for obtaining the water-containing sheet 11 is preferably 4 m/min or more, and more preferably 7 m/min or more. A take-up speed is usually the same as the papermaking speed.

In this disclosure, after the water-containing sheet preparation step S1, the obtained water-containing sheet 11 can be subjected to an interlacing treatment as necessary. Examples of an interlacing method include a mechanical interlacing method (such as a needle punching method), a high-pressure liquid injection method (such as a water jet punching method), and a high-pressure gas injection method (such as a steam jet punching method).

Next, in the composite sheet preparation step S2, the water-containing sheet 11 is water-squeezed and dried to prepare the composite sheet 12. In this disclosure, the composite sheet 12 may be prepared using a single-layer water-containing sheet or a laminated water-containing sheet in which a plurality of single-layer water-containing sheets are laminated.

In the composite sheet preparation step S2 disclosed here, methods for water-squeezing and drying the water-containing sheet 11 are not particularly limited. The water-squeezing can be performed using a suction box for suctioning water, a press roll for squeezing and dewatering, or the like. Thereafter, the water-squeezed sheet is transferred to, for example, a drum-shaped Yankee dryer having a mirror-finished surface and heated to obtain the dried composite sheet 12. Depending on a shape, a size, and the like of the sheet, the sheet may be dried under a reduced pressure condition. A heating temperature (drying temperature) is not particularly limited as long as the fibrillated organic fiber R1 and the organic fiber R2 are not deformed or altered, and is preferably 70°C to 160°C, and more preferably 90°C to 130°C.

The composite sheet 12 in an absolute dry state obtained in the composite sheet preparation step S2 has a structure in which the carbon fiber C1 and the graphite particles P1 are held between the fibrillated organic fibers R1 to such an extent difficult to move in the sheet. Therefore, the composite sheet 12 has a composition in which the ratios of the usage amounts of the raw materials used in the water-containing sheet preparation step S1 are maintained as they are. In addition, the obtained composite sheet 12 has a basis weight of preferably 20 g/m² to 150 g/m², and a thickness that is preferably 1.5 to 6 times a thickness of the gas diffusion layer base material 1 to be produced, which is usually 50 *µ*m to 600 *µ*m.

A content ratio of the carbon fiber C1 contained in the composite sheet 12 disclosed here is preferably 20 mass% to 80 mass%, and more preferably 30 mass% to 70 mass%.

A content ratio of the graphite particles P1 contained in the above composite sheet 12 is preferably 5 mass% to 60 mass%, and more preferably 10 mass% to 50 mass%.

In addition, a content ratio of the fibrillated organic fiber R1 contained in the above composite sheet 12 is preferably 5 mass% to 60 mass%, and more preferably 10 mass% to 50 mass%.

Since the composite sheet 12 disclosed here contains various types of fibers (such as the carbon fiber C1 and the fibrillated organic fiber R1) and a length of each fiber varies, some of the fibers may protrude, that is, fluffs, from a surface of the composite sheet 12 after drying, and the surface of the composite sheet 12 may not be smooth. In this case, before the resin impregnation step S3, a treatment of cutting or removing the fibers protruding from the surface of the composite sheet 12 or a treatment of pushing the fibers into the composite sheet 12 may be performed as necessary.

Thereafter, in the resin impregnation step S3, the composite sheet 12 is impregnated with a carbon precursor resin that can be carbonized in the carbonization step to prepare a resin impregnation sheet 13.

The carbon precursor resin is not particularly limited, and preferably contains a thermosetting resin such as a phenol resin, a furan resin, an epoxy resin, a melamine resin, an imide resin, a urethane resin, an aramid resin, a urea resin, or an unsaturated polyester resin since it has excellent wettability with the carbon fiber C1, the fibrillated organic fiber R1, or the organic fiber R2 and easily forms an electrically conductive carbide in the subsequent carbonization step. Among these, the phenol resin is particularly preferred since it has a high carbonization rate and becomes an excellent electrically conductive substance after carbonization. Depending on the type of the thermosetting resin, the carbon precursor resin may contain a curing accelerator.

In the resin impregnation step S3 disclosed here, the carbon precursor resin can be used as it is when it is a liquid, and a solution (resin solution) obtained by dissolving the liquid carbon precursor resin in a solvent or a dispersion liquid (resin dispersion liquid) obtained by dispersing the carbon precursor resin in a dispersion medium may be used. When the carbon precursor resin is a solid, the solution (resin solution) obtained by dissolving the carbon precursor resin in a solvent is preferably used.

When the resin solution or the resin dispersion liquid is used in the resin impregnation step S3, the composite sheet 12 which is a fiber aggregate containing the carbon fiber C1, the graphite particles P1, the fibrillated organic fiber R1, and the organic fiber R2 and having voids can be efficiently permeated.

When a carbon precursor resin-containing liquid is used to prepare the resin impregnation sheet 13, a method for immersing the composite sheet 12 in the carbon precursor resin-containing liquid, a method for applying the carbon precursor resin-containing liquid to the composite sheet 12 (kiss coating method, spray method, curtain coating method, roller contact method, or the like), or the like can be applied. Among these, the method for immersing the composite sheet 12 in the carbon precursor resin containing-liquid is preferred.

Since a dried state of the resin impregnation sheet 13 used in the carbonization step S5 is not particularly limited, when the carbon precursor resin-containing liquid is brought into contact with the composite sheet 12 in the resin impregnation step S3, the dried resin impregnation sheet 13 containing no solvent or dispersion medium can be obtained by using a non-contact drying method in which hot air is blown to a liquid-adhering sheet, the liquid-adhering sheet is placed in a high-temperature atmosphere, or the liquid-adhering sheet is dried using an infrared heater or microwaves, or a contact drying method in which the liquid-adhering sheet is brought into contact with a heated roll, plate, or the like.

As described above, when the carbon precursor resin-containing liquid is used in the resin impregnation step S3, the liquid can cause the inside of the composite sheet 12 to be efficiently permeated. As another method for impregnating the composite sheet 12 with the carbon precursor resin without using the carbon precursor resin-containing liquid, a method of bringing a resin film containing the carbon precursor resin into contact with and adhering the resin film to at least a part of the surface of the composite sheet 12, dissolving the adhering carbon precursor resin by heating, solvent spraying, or the like, and causing the entire composite sheet 12 to be permeated can be exemplified.

In the resin impregnation step S3 disclosed here, the carbon precursor resin-containing liquid and the like are preferably brought into contact with the composite sheet 12 such that a content ratio of the carbon precursor resin (pure content) is 10 mass% to 80 mass%, and further 20 mass% to 70 mass%, when a total of the composite sheet 12 in the absolute dry state and the carbon precursor resin (pure content) is 100 mass%. When the content ratio of the carbon precursor resin (pure content) is 25 mass% to 50 mass%, air permeability in a thickness direction of the gas diffusion layer base material 1 disclosed here obtained by the carbonization step S5 is suitable.

Next, in the compression step S4, the resin impregnation sheet 13 obtained in the resin impregnation step S3 is compressed into a thinned sheet 14. A degree of compression is not particularly limited, and the graphite particles P1 used as a production raw material or small pieces derived therefrom are exposed on a surface on at least one surface side. In addition, even when the obtained thinned sheet 14 is subjected to the carbonization step S5 thereafter, the thickness does not change, and thus the thickness of the thinned sheet 14 obtained by the compression step S4 is substantially the same as the thickness of the gas diffusion layer base material 1 disclosed here.

In the compression step S4 disclosed here, depending on the size of the graphite particles P1 contained in the resin impregnation sheet 13, the thinned sheet 14 having a thickness smaller than the particle diameter of the graphite particles P1 is obtained. For example, in the case of preparing the thinned sheet 14 having a thickness smaller than the particle diameter of the graphite particles P1, the resin impregnation sheet 13 is compressed while crushing the graphite particles P1. Even in such a case, the carbon precursor resin contained in the resin impregnation sheet 13 acts to reliably compress the resin impregnation sheet 13 without releasing the graphite particles P1, the crushed product thereof, or the like. Then, the thinned sheet 14 having a thickness smaller than the particle diameter of the graphite particles P1 contains the crushed product of the graphite particles P1.

On the other hand, in the case of preparing the thinned sheet 14 having a thickness equal to or larger than the particle diameter of the graphite particles P1, the thinned sheet 14 in which the shape of the graphite particles P1 is held can be usually obtained, and when the graphite particles P1 are contained in the composite sheet 12 at the preferred content ratio described above, some of the graphite particles P1 tend to be exposed on at least one surface side of the thinned sheet 14.

In the compression step S4 disclosed here, a hydraulic press, a belt press, a roll press, or the like can be used. Conditions (a pressure, a time, and the like) during the compression are not particularly limited. Depending on the type of the carbon precursor resin, the resin impregnation sheet 13 may be compressed while being heated. In a case where the carbon precursor resin contains a thermosetting resin, when the resin impregnation sheet 13 is compressed while being heated, it is possible to obtain the thinned sheet 14 whose shape is fixed by a cured resin that easily forms an electrically conductive carbide in the subsequent carbonization step S5.

The thinned sheet 14 disclosed here has a thickness of preferably 50 µm to 500 µm, and more preferably 50 µm to 300 µm.

Thereafter, in the carbonization step S5, the thinned sheet 14 is heated and fired in a non-oxidizing atmosphere to obtain the fuel cell gas diffusion layer base material 1 disclosed here. The non-oxidizing atmosphere may be an atmosphere containing an inert gas such as an argon gas or a helium gas, a nitrogen gas, or the like. A method of heating and firing the thinned sheet 14 is not particularly limited, and a method using a high-temperature furnace, a method of performing irradiation with a laser, or the like can be used.

In the case of heating and firing the thinned sheet 14, a heating temperature is preferably 1,800°C to 2,500°C, and more preferably 1,900°C to 2,200°C, in order to smoothly carbonize the organic fibers and the carbon precursor resin without deteriorating a strength of the carbon fiber C1. In the case of heating and firing the thinned sheet 14 using the high-temperature furnace, a multistage heating method in which the thinned sheet 14 is heated at a temperature lower than the preferred temperature described above and then the temperature is increased may be applied.

In addition, a heating time for the thinned sheet 14 is usually 1 minute or longer depending on a size thereof.

In the case of irradiating the thinned sheet 14 with a laser, either a continuous-wave laser or a pulse-wave laser may be used. As a specific method of performing the irradiation with a laser, a method of performing irradiation with a laser in a state where the thinned sheet 14 is fixed, a method of moving the thinned sheet 14 while irradiating the thinned sheet 14 with a laser at a predetermined position, or the like can be used, and if necessary, a method of repeating spot irradiation on the thinned sheet 14 using a plurality of laser light sources, a method of irradiating the thinned sheet 14 with a laser while performing scanning with a laser or widening an irradiation area through a diffusion lens, or the like can be used.

In the carbonization step S5 disclosed here, the organic fibers and the carbon precursor resin contained in the thinned sheet 14 are carbonized, voids are formed inside to a degree to have suitable air permeability in the thickness direction, and further, it is possible to obtain the fuel cell gas diffusion layer base material 1 in which the carbon fibers C1 are bound together, the graphite particles P1 are bound together, or the carbon fiber C1 and the graphite particles P1 are bound together by the formed carbide (see Fig. 2).

The fuel cell gas diffusion layer base material 1 used for preparing a membrane electrode assembly, which is a component for producing a fuel cell, can be obtained by the carbonization step S5 disclosed here, and the method for producing a fuel cell gas diffusion layer base material disclosed here can further include a smoothing step of smoothing the surface, a water repellent step of imparting water repellency to the surface, and the like as necessary.

In the water repellent step, a method of bringing the gas diffusion layer base material 1 into contact with a solution or a dispersion liquid of a water repellent material, and then performing a heat treatment as necessary to fix the water repellent material can be applied.

The water repellent material is preferably a fluororesin, and polytetrafluoroethylene (PTFE), a tetrafluoroethylene-hexafluoropropylene copolymer (FEP), a tetrafluoroethylene-perfluoroalkyl vinyl ether copolymer (PFA), a tetrafluoroethylene-ethylene copolymer (ETFE), or the like can be used.

Fig. 2 is a schematic cross-sectional view showing a preferred embodiment of the fuel cell gas diffusion layer base material 1 obtained by this disclosure, and the fuel cell gas diffusion layer base material 1 includes a plurality of carbon fibers C1, a plurality of graphite portions 4 (derived from the graphite particles P1 or the crushed product thereof), and carbonized portions 6 made of a carbide formed by carbonizing the organic fibers contained in the water-containing sheet 11 and the carbon precursor resin contained in the thinned sheet 14 by the carbonization step, and has a structure in which the graphite portions 4 are exposed on the surface on at least one surface side of the gas diffusion layer base material 1. The carbonized portion 6 in Fig. 2 does not show that a region excluding the carbon fiber C1 and the graphite portion 4 is filled with the carbide, and voids (not shown) are formed from one surface side toward the other surface side of the fuel cell gas diffusion layer base material 1, that is, inside the carbonized portion 6, to a degree to have air permeability in the thickness direction of the gas diffusion layer base material 1 while the carbide binds the graphite portions 4 to each other or binds the carbon fiber C1 to the graphite portion 4.

The fuel cell gas diffusion layer base material 1 disclosed here is a thin plate-shaped material having a thickness of preferably 55 µm to 600 µm, and more preferably 70 µm to 350 µm.

The fuel cell gas diffusion layer base material 1 disclosed here can be used, for example, for forming a cathode gas diffusion layer or an anode gas diffusion layer in the membrane electrode assembly. The membrane electrode assembly (not shown) in a particularly preferred embodiment sequentially includes a cathode gas diffusion layer formed using the fuel cell gas diffusion layer base material 1 disclosed here, a microporous layer, a catalyst layer, an electrolyte layer, a catalyst layer, a microporous layer, and an anode gas diffusion layer.

The fuel cell gas diffusion layer base material 1 obtained by this disclosure has a strong electrically conductive path due to a phase (carbonized portion 6) mainly containing a carbide, and the carbon fiber C1 and the graphite portion 4 contained in the phase, and since the carbide is derived from the organic fibers and the carbon precursor resin, the gas diffusion layer base material 1 has elasticity and has improved dimensional absorbability when bonded to an electrolyte layer forming material or a catalyst layer forming material during the production of the fuel cell. Further, when the fuel cell gas diffusion layer base material 1 disclosed here is used as the cathode gas diffusion layer base material to prepare the membrane electrode assembly, and the membrane electrode assembly is used in a fuel cell to be driven, water generated during power generation can be efficiently discharged to the outside of the system (outside the cathode gas diffusion layer on a side where the microporous layer is not disposed), and a decrease in power generation performance due to flooding can be prevented, and thus high power generation performance is exhibited.

In the case of producing the membrane electrode assembly, the fuel cell gas diffusion layer base material 1 disclosed here may be applied as it is to an electrode for a gas diffusion layer, and a laminate (gas diffusion layer laminate) obtained by forming the microporous layer on one surface side is preferably used. When a fuel cell including the membrane electrode assembly prepared using the gas diffusion layer laminate including the microporous layer is driven, the flooding caused by large water droplets generated by condensation of water vapor can be prevented.

The above microporous layer is preferably a microporous layer containing an electrically conductive material and a water repellent resin and having an upper limit of thickness of about 100 µm.

Examples of the electrically conductive material include carbon black, carbon nanotubes, carbon nanofibers, chopped fibers of carbon fibers, graphene, and graphite.

As the water repellent resin, the above fluororesin is preferably used.

The membrane electrode assembly can be produced using an anode gas diffusion layer base material (which may be made water repellent) having a microporous layer on one surface side, a cathode gas diffusion layer base material (which may be made water repellent) including a microporous layer on one surface side, and a laminate obtained by forming catalyst layers on both surfaces of an electrolyte membrane (polymer electrolyte membrane) that selectively permeates specific ions, and a fuel cell (single cell) can be produced using this membrane electrode assembly and separators (an anode side separator and a cathode side separator).

In the fuel cell having such a configuration, when an oxidizing gas is supplied from the outside to an oxidizing gas flow path of the cathode side separator, a part of the oxidizing gas flowing along the oxidizing gas flow path enters the inside of the cathode gas diffusion layer. Other unreacted oxidizing gas that does not enter therein flows along the oxidizing gas flow path and is discharged to the outside of the fuel cell. Similarly, when a fuel gas is supplied from the outside to a fuel gas flow path of the anode side separator, a part of the fuel gas flowing along the fuel gas flow path enters the inside of the anode gas diffusion layer. Other unreacted fuel gas that does not enter therein flows along the fuel gas flow path and is discharged to the outside of the fuel cell.

Then, the oxidizing gas and the fuel gas react with each other, so that electric power is extracted between the cathode side separator and the anode side separator.

The gas diffusion layer base material 1 disclosed here is obtained by carbonizing a carbonized precursor sheet containing the carbon fiber C1, the graphite particles P1 having a diameter of more than 120 µm, the fibrillated organic fiber R1, and an impregnation resin, and the graphite particles P1 are exposed on the surface on at least one surface side.

The configuration of the above fuel cell gas diffusion layer base material 1 can be applied to the configuration of the gas diffusion layer base material 1 disclosed here.

The carbonized precursor sheet forming the gas diffusion layer base material 1 disclosed here is not particularly limited as long as it is a sheet-shaped material containing the carbon fiber C1, the graphite particles P1 having a diameter of more than 120 µm, the fibrillated organic fiber R1, and the impregnation resin. Specific examples of the carbonized precursor sheet include the water-containing sheet 11, the composite sheet 12, the resin impregnation sheet 13, and the thinned sheet 14 in the above method for producing the fuel cell gas diffusion layer base material 1.

For example, when the gas diffusion layer base material 1 disclosed here is used for producing a fuel cell, as described above, the gas diffusion layer base material 1 can be used as a material for forming a cathode gas diffusion layer or an anode gas diffusion layer in a membrane electrode assembly sequentially including the cathode gas diffusion layer, a microporous layer, a catalyst layer, an electrolyte layer, a catalyst layer, a microporous layer, and the anode gas diffusion layer.

In addition, the gas diffusion layer base material 1 disclosed here can be used as an electrode material for a secondary battery having a predetermined size by cutting or the like or a production raw material for an electrode layer in a redox flow battery.

### Examples

Hereinafter, this disclosure will be specifically described with reference to Examples, but this disclosure is not limited to such Examples as long as the gist disclosed here is not exceeded.

### 1. Production Raw Material for Gas Diffusion Layer Base Material

Production raw materials used in Examples and Comparative Examples are as follows.
1-1. Carbon fiber C1
   Carbon fiber (fiber length: 3 mm, fiber diameter: 7 µm) manufactured by Teijin Limited.
1-2. Graphite particles P1
   (G1) Graphite particles "PAG-80" (trade name, particle diameter obtained by laser diffraction/scattering method: 220 µm) manufactured by Nippon Graphite Industries, Co., Ltd.
   (G2) Graphite particles "PAG-120" (trade name, particle diameter obtained by laser diffraction/scattering method: 130 µm) manufactured by Nippon Graphite Industries, Co., Ltd.
   (G3) Graphite particles "CGB-90" (trade name, particle diameter obtained by laser diffraction/scattering method: 90 µm) manufactured by Nippon Graphite Industries, Co., Ltd.
   (G4) Graphite particles "PAG-C" (trade name, particle diameter obtained by laser diffraction/scattering method: 50 µm) manufactured by Nippon Graphite Industries, Co., Ltd.
   (G5) Graphite particles "HAG-10W" (trade name, particle diameter obtained by laser diffraction/scattering method: 20 µm) manufactured by Nippon Graphite Industries, Co., Ltd.
1-3. Fibrillated organic fiber R1
   Acrylic pulp fiber (fiber length: 2 mm, average fiber diameter of trunk fiber portion: 15 µm, Canadian standard freeness: 550 mL) manufactured by Toyobo Co., Ltd.
1-4. Linear organic fiber R2
   Vinylon fiber (fiber length: 3 mm, fiber diameter: 11 µm) manufactured by Kuraray Co., Ltd.

### 2. Production and Evaluation of Gas Diffusion Layer Base Material

The above raw materials were prepared at a predetermined ratio and further mixed with water in a pulpier to prepare a slurry. Then, the obtained slurry was subjected to papermaking and then dried to obtain the composite sheet 12, the composite sheet 12 was impregnated with a phenol resin, and then the obtained resin impregnation sheet 13 was compressed and further subjected to a carbonization treatment to obtain the fuel cell gas diffusion layer base material 1. Then, the normal air permeability and the contact resistance value of the fuel cell gas diffusion layer base material 1 were measured.

### Example 1

The carbon fiber (47 parts by mass), 20 parts by mass of the graphite particles G1, 17 parts by mass of the acrylic pulp fiber, 16 parts by mass of the vinylon fiber, and 5,000 parts by mass of water were mixed to prepare a slurry, and the slurry was further diluted 200 times to prepare a papermaking slurry, which was then used for continuous papermaking using a cylinder papermaking machine (average papermaking speed: 7 m/min) to obtain a water-containing sheet in which the carbon fiber, the acrylic pulp fiber, and the vinylon fiber were entangled and in which the graphite particles G1 were present in gaps between the fibers.

Next, the water-containing sheet was dehydrated at a pressure of 6 kgf/cm² using a press roll, and further dried at 130°C using a Yankee dryer to obtain a composite sheet.

Thereafter, the composite sheet was dip-coated with a solution of the phenol resin, as the carbon precursor resin, and dried at 120°C using a hot air dryer to obtain a resin impregnation sheet in which an amount of the phenol resin adhering to 100 parts by mass of the composite sheet was 25 parts by mass. Then, a double belt press apparatus was used to perform hot pressing (250°C for 10 seconds) to obtain a thinned sheet containing crushed and deformed graphite or partially crushed graphite. The thickness was 120 µm.

Next, the thinned sheet was subjected to a heat treatment (time: 1 minute) in a furnace having an internal temperature of 2,000°C and a nitrogen gas atmosphere to obtain a fuel cell gas diffusion layer base material (hereinafter referred to as a "gas diffusion layer base material S1"). This gas diffusion layer base material S1 had a basis weight of 30 g/m² and a thickness of 120 µm (see Table 1).

For the obtained gas diffusion layer base material S1, the normal air permeability and the contact resistance value were measured by the following methods. The results are shown in Table 1 together with the calculated values per thickness.

### (1) Normal air permeability (Pa•s)

A nitrogen gas was fed to the base material in a normal direction, and a differential pressure of the passing gas was converted to obtain the normal air permeability.

### (2) Contact resistance value (mΩ•cm²)

The contact resistance value was measured in a state where both surfaces of the base material were pressurized with a metal block at 0.8 MPa.

Fig. 2 is a cross-sectional image of the gas diffusion layer base material S1 by an electron microscope, and it can be seen that a part of graphite deformed, etc. by the hot pressing using the double belt press apparatus is exposed on both surfaces. In Fig. 2, a carbide of the acrylic pulp fiber (fibrillated organic fiber R1), the vinylon fiber (linear organic fiber R2), and the phenol resin by the heat treatment for the thinned sheet is not clear, but since the base material has a stable shape and the normal air permeability is measured as described above, it is presumed that the carbide binds the carbon fibers to each other or binds the carbon fiber to graphite while having air permeability in a cross-sectional direction.

### Examples 2 to 4 and Comparative Examples 1 to 4

Each fuel cell gas diffusion layer base material was obtained by performing the same operation as in Example 1 except that the carbon fiber, the graphite particles, the acrylic pulp fiber, and the vinylon fiber were used at ratios shown in Table 1, and further, a slurry obtained by mixing a predetermined amount of water with the total amount of these materials in the same manner as in Example 1 was used. Hereinafter, the fuel cell gas diffusion layer base materials obtained in Examples 2 to 4 are referred to as a "gas diffusion layer base material S2", a "gas diffusion layer base material S3", and a "gas diffusion layer base material S4", respectively, and the fuel cell gas diffusion layer base materials obtained in Comparative Examples 1 to 4 are referred to as a "gas diffusion layer base material SS1", a "gas diffusion layer base material SS2", a "gas diffusion layer base material SS3", and a "gas diffusion layer base material SS4", respectively. In Example 4, it has been found that, although not shown, the graphite particles G2 having a particle diameter smaller than the thickness of the thinned sheet and the gas diffusion layer base material are contained, but the graphite particles G2 are exposed on one surface side of the obtained gas diffusion layer base material S4.

Thereafter, the normal air permeability and the contact resistance value were measured in the same manner as in Example 1. The results are also shown in Table 1.

### [Table 1]

**Table 1**

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| | Carbon fiber | | 47 | 47 | 47 | 47 | 47 | 47 | 47 | 47 |
| | Graphite particles | G1 (220 µm) | 20 | 20 | | | | | | |
| | | G2 (130 µm) | | | 20 | 20 | | | | |
| Raw material (mass%) | | G3 (90 µm) | | | | | 20 | | | |
| | | G4 (50 µm) | | | | | | 20 | 20 | |
| | | G5 (20 µm) | | | | | | | | 20 |
| | Acrylic pulp fiber | | 17 | 17 | 17 | 17 | 17 | 17 | 17 | 17 |
| | Vinylon fiber | | 16 | 16 | 16 | 16 | 16 | 16 | 16 | 16 |
| | Type | | S1 | S2 | S3 | S4 | SS1 | SS2 | SS3 | SS4 |
| | Thickness | µm | 120 | 180 | 120 | 180 | 180 | 120 | 180 | 180 |
| | Basis weight | g/m² | 30 | 45 | 30 | 45 | 45 | 30 | 45 | 45 |
| Gas diffusion layer base material | Normal air permeability | Pa•s | 7200 | 4800 | 6500 | 4400 | 4200 | 5900 | 4000 | 4000 |
| | | ×10³ Pa•s•µm | 864 | 864 | 780 | 792 | 756 | 708 | 720 | 720 |
| | Contact resistance value | mΩ•cm² | 3.8 | 5.5 | 4 | 6 | 6.1 | 4.2 | 6.5 | 6.3 |
| | | (mΩ•cm²)/µm | 32 | 31 | 33 | 33 | 34 | 35 | 36 | 35 |

Table 1 shows the following.

Examples 1 to 4 are examples of the production method disclosed here, and the normal air permeability of the obtained fuel cell gas diffusion layer base material is as high as 750,000 Pa•s•µm or more, and the contact resistance value per thickness is less than 34 (mΩ•cm²)/µm. In this manner, the fuel cell gas diffusion layer base materials in Examples 1 to 4 have excellent gas permeability in the thickness direction and electrical conductivity as compared with the fuel cell gas diffusion layer base materials in Comparative Examples 1 to 4, and thus can be suitably used as a production material for a fuel cell to exhibit high power generation performance.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Industrial Applicability

The fuel cell gas diffusion layer base material obtained by this disclosure is suitable as a material for forming a cathode gas diffusion layer constituting a membrane electrode assembly included in a fuel cell. Therefore, a fuel cell including such a cathode gas diffusion layer exhibits high power generation performance, and can be used for a transportation fuel cell for vehicles, etc., a stationary fuel cell, and the like.

## Claims

1. A method for producing a fuel cell gas diffusion layer base material (1), the method sequentially comprising:
a water-containing sheet preparation step (S1) of preparing a water-containing sheet (11) containing a carbon fiber (C1), graphite particles (P1) having a particle diameter more than 120 µm as measured by a laser diffraction/scattering method, and a fibrillated organic fiber (R1), which is to be carbonized in a subsequent carbonization step (S5), by using a slurry containing the carbon fiber, the graphite particles, and the fibrillated organic fiber;
a composite sheet preparation step (S2) of preparing a composite sheet (12) by water-squeezing and drying the water-containing sheet;
a resin impregnation step (S3) of preparing a resin impregnation sheet (13) by impregnating the composite sheet with a carbon precursor resin to be carbonized in the subsequent carbonization step;
a compression step (S4) of preparing a thinned sheet (14) by compressing the resin impregnation sheet; and
the carbonization step of heating and firing the thinned sheet in a non-oxidizing atmosphere.

2. The method for producing a fuel cell gas diffusion layer base material according to claim 1, wherein
a content ratio of the carbon fiber contained in the composite sheet is 20 mass% to 80 mass%.

3. The method for producing a fuel cell gas diffusion layer base material according to claim 1, wherein
a content ratio of the graphite particles contained in the composite sheet is 5 mass% to 60 mass%.

4. The method for producing a fuel cell gas diffusion layer base material according to claim 1, wherein
a content ratio of the fibrillated organic fiber contained in the composite sheet is 5 mass% to 60 mass%.

5. The method for producing a fuel cell gas diffusion layer base material according to claim 1, wherein
a content ratio of the carbon precursor resin contained in the resin impregnation sheet is 10 mass% to 80 mass%.

6. The method for producing a fuel cell gas diffusion layer base material according to claim 1, wherein
in the compression step, the graphite particles are crushed and compressed in a plane direction to a thickness less than the particle diameter of the graphite particles.

7. A fuel cell gas diffusion layer base material (1) obtained by the method for producing a fuel cell gas diffusion layer base material according to claim 1.

8. The fuel cell gas diffusion layer base material according to claim 7, wherein
graphite is exposed on a surface on at least one surface side.

9. A gas diffusion layer base material (1) obtained by carbonizing a carbonized precursor sheet containing a carbon fiber (C1), graphite particles (P1) having a diameter of more than 120 µm, a fibrillated organic fiber (R1), and an impregnation resin, wherein
the graphite particles are exposed on a surface on at least one surface side.
